# FASCICULE DE BREVET EUROPEEN

(11) **EP 0 452 730 B1**
(45) Date de publication et mention de la délivrance du brevet: **06.04.1994**
(21) Numéro de dépôt: 91105202.5
(22) Date de dépôt: 02.04.1991
(51) Int. Cl.: B29D 30/06

(54) **Moules à secteurs à recul radial combiné à un basculement**
Form mit schwenkbaren und radial bewegbaren Segmenten
Mould with pivoting, radially opening segments

(30) Priorité: 19.04.1990 FR 9005106
(43) Date de publication de la demande: 23.10.1991
(73) Titulaire: PNEUMATIQUES KLEBER, 54520 Laxou (FR)
(72) Inventeur: Christof, Walter, F-54200 Toul (FR)
(74) Mandataire: Bauvir, Jacques

(56) Documents cités:
- FR-A- 1 522 640
- FR-A- 1 590 815
- FR-A- 2 236 647
- FR-A- 2 342 153

## Description

La présente invention se rapporte aux moules à secteurs pour pneumatiques, en particulier aux moules tels que décrits dans la demande de brevet FR 2 342 153.

Ce type de moule comporte une partie moulante inférieure, une partie moulante supérieure, et une série de secteurs pour assurer le moulage, respectivement, d'un flanc, de l'autre flanc, et de la bande de roulement du pneumatique. En outre, le moule comporte une frette périphérique entourant les secteurs, provoquant leur mouvement radial de fermeture (rapprochement radialement vers le centre de tous les secteurs) et les maintenant fermement clos pour résister à la pression de moulage. L'ouverture du moule, outre une cinématique appropriée, fait appel à l'action de ressorts pour reculer les secteurs, c'est-à-dire les éloigner du centre du moule, et pour les faire basculer légèrement. Pour plus de détails, il convient de se reporter à la demande de brevet précitée.

L'avantage de ce type de moule par rapport aux moules à conteneur, dans lesquels les secteurs accompagnent la partie moulante supérieure qui se soulève lors de l'ouverture du moule, réside dans le fait que le poids à soulever pour ouvrir le moule est bien plus faible puisque toute la-partie moulant la bande de roulement reste sur le plateau inférieur de la presse, tout comme la partie moulante inférieure. En outre, le perfectionnement proposé dans la demande de brevet précitée permet un moindre encombrement en diamètre. Ou, à encombrement constant, il permet de mouler des pneumatiques de plus grand diamètre. En effet, le basculement des secteurs permet d'atteindre plus vite un diamètre de dégagement suffisant pour extraire le pneumatique vulcanisé.

Beaucoup de sculptures moulées sur les bandes de roulement de pneumatiques, notamment les pneumatiques pour véhicule de tourisme, comportent de nombreuses lamelles. Cela impose d'assurer un mouvement de recul purement radial lors du démoulage, pour limiter autant que faire se peut les efforts de démoulage imposés au pneumatique et aux lamelles. Or, dans le moule objet du brevet précité, seuls les ressorts de recul radial assurent le mouvement d'ouverture de la série de secteurs. L'ouverture se passe de la façon suivante : le dégagement de la frette périphérique n'est suivi d'aucun mouvement des pièces moulantes, l'écartement de la partie moulante supérieure permet le basculement du secteur sous l'action du ou des ressorts interposés entre la partie moulante inférieure et chaque secteur ; ensuite, les secteurs étant tous décollés de la bande de roulement, ils s'écartent tous sous l'action des ressorts de recul radial.

Avec ce moule connu, il s'avère impossible de provoquer le recul radial avant le basculement. En effet, l'effort d'arrachement d'un secteur hors de la bande de roulement vulcanisée est très important, parce qu'il y a un effet de collage du secteur sur la bande de roulement. On ne peut pas installer des ressorts de recul radial suffisamment puissants pour vaincre ce collage dans tous les cas de figure que l'on peut rencontrer. Le ressort théorique nécessaire pour développer un effort suffisant serait trop encombrant.

Dans les types de moules à secteurs à recul purement radial, le mouvement de recul est provoqué par des glissières du genre "queues d'arronde" et ce type de commande est incompatible avec le basculement du secteur. L'invention vise à concilier le mouvement de recul purement radial lors de la phase de démoulage de la sculpture survenant au tout début du recul, avec un basculement ultérieur des secteurs, pour conserver un encombrement aussi réduit que possible.

Selon l'invention, le moule à secteurs pour le moulage et la vulcanisation des pneumatiques, du type comportant une partie moulante inférieure pour le moulage d'un flanc du pneumatique, une partie moulante supérieure pour le moulage de l'autre flanc, et une série de secteurs pour le moulage de la bande de roulement, ainsi qu'une couronne de fermeture et de frettage de la série de secteurs, : la couronne comprenant une face inclinée, les mouvements d'ouverture, fermeture impliquant un recul radial des secteurs et un basculement du bout des secteurs vers l'extérieur, ainsi qu'une élévation de la partie moulante supérieure, la face radialement extérieure de chaque secteur étant inclinée de façon à coopérer avec la face inclinée complémentaire de ladite couronne, ladite couronne pouvant être élevée et abaissée séparément de la partie moulante supérieure, chaque secteur étant en permanence rappelé vers la position reculée et basculée par un ou des ressorts, est caractérisé en ce que chaque secteur est pourvu d'au moins une protubérance horizontale se développant radialement au-delà de ladite face inclinée, chaque protubérance étant percée d'un logement, et en ce que la couronne comporte, en correspondance avec chaque logement, une tige inclinée disposée de façon à pouvoir pénétrer dans le logement lors de la fermeture du moule, et à coopérer avec ladite protubérance pour provoquer le recul radial des secteurs lors de l'ouverture du moule.

Montée dans la presse de vulcanisation, la partie moulante inférieure est solidaire du plateau inférieur fixe de la presse ; la partie moulante supérieure est solidaire d'un plateau supérieur, mobile selon l'axe du moule. La couronne de fermeture est solidaire d'un mécanisme qui en assure le mouvement selon l'axe du moule, séparément du mouvement précédent. La face radialement intérieure de la couronne de fermeture est en général une face tronconique. La face radialement extérieure des secteurs, qui coopère, comme bien connu, avec la couronne de fermeture, est également tronconique et correspond exactement à ladite face radialement intérieure de la couronne. L'inclinaison des troncs de cônes est telle que, à partir d'une position écartée des secteurs, un abaissement de la couronne, par un mouvement parallèle à l'axe du moule dans un sens allant depuis le plateau supérieur vers le plateau inférieur, par le glissement des faces tronconiques l'une sur l'autre provoque un déplacement des secteurs dans le sens radial, vers leur position de fermeture.

Il est bien certain que c'est l'inclinaison par rapport à l'axe du moule qui assure cette cinématique, la disposition en tronc de cône n'en étant qu'une réalisation spécifique non limitative. C'est la raison pour laquelle on qualifie ces faces d'"inclinées" dans les revendications, alors que, dans la description, on parie de troncs de cônes.

L'invention est illustrée dans la suite à l'aide d'un exemple de réalisation qui apparaît sur les dessins suivants :
Les figures 1, 2, 3 et 3' montrent le moule de l'invention au cours de la fermeture ;
Les figures 4 et 4' montrent le moule de l'invention lors de la fermeture ;
Les figures 5, 5' et 6 montrent le moule de l'invention au cours de l'ouverture ;
Les figures 7 et 7' montrent une coupe partielle perpendiculaire à l'axe du moule ;

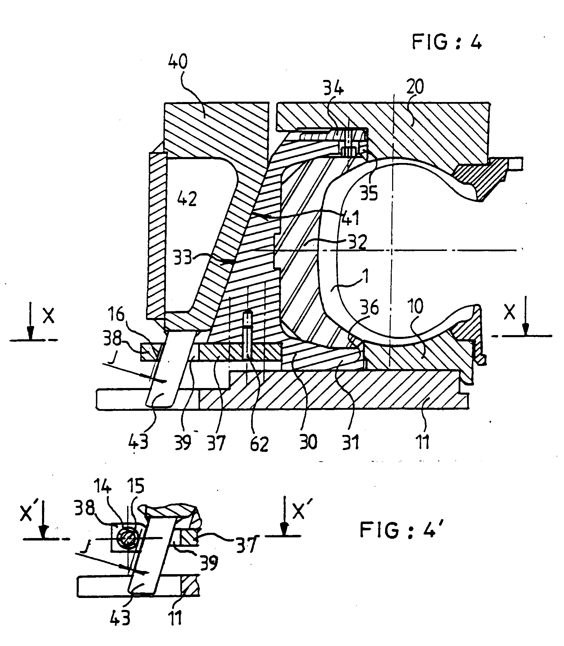

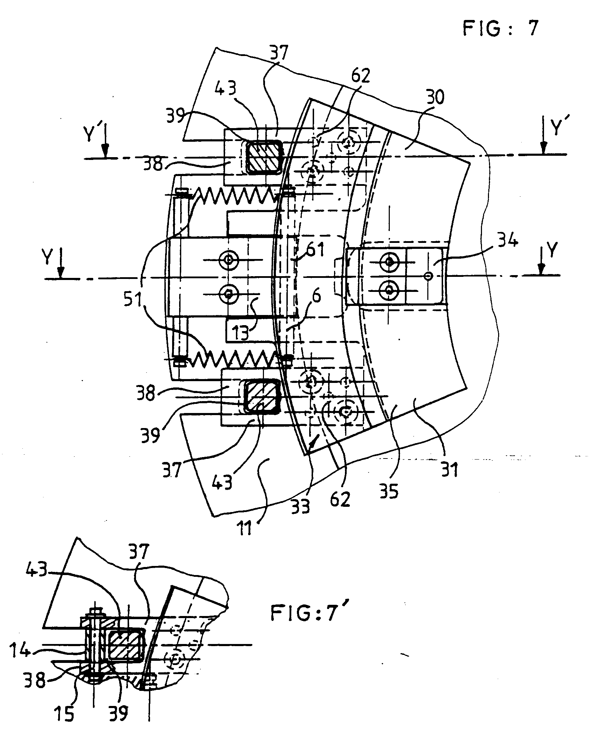

La figure 7 est une coupe selon XX à la figure 4 ;
La figure 7' est une coupe selon X'X' à la figure 4 ;

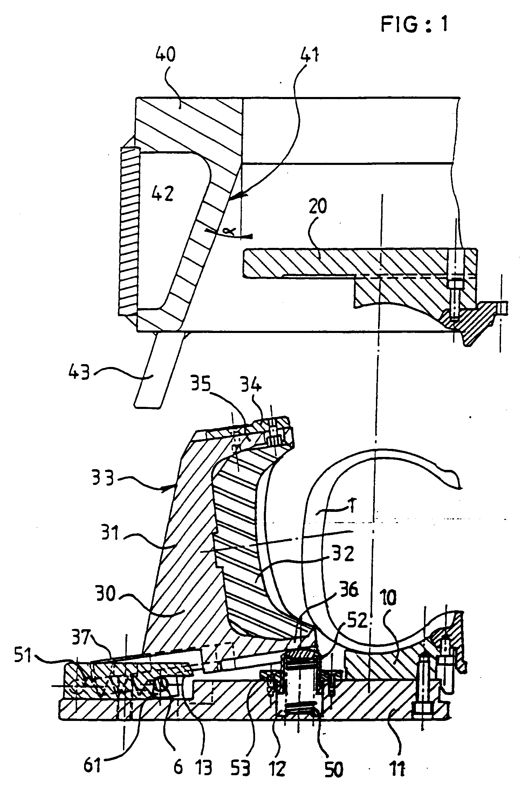

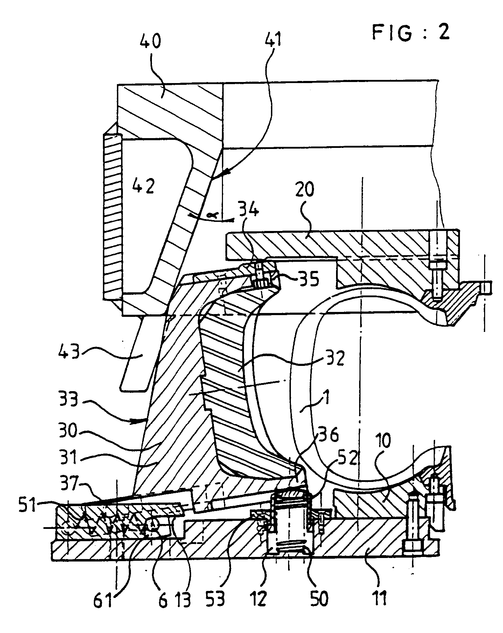

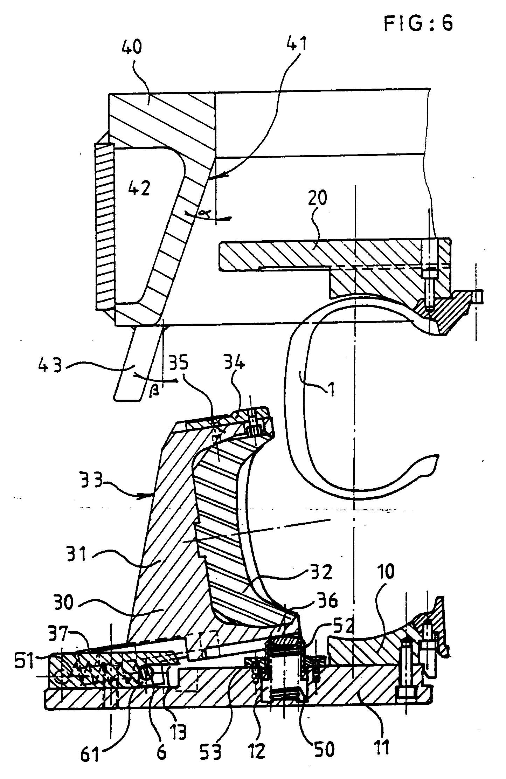

Les figures 1, 2 et 6 sont des coupes selon YY à la figure 7 ;

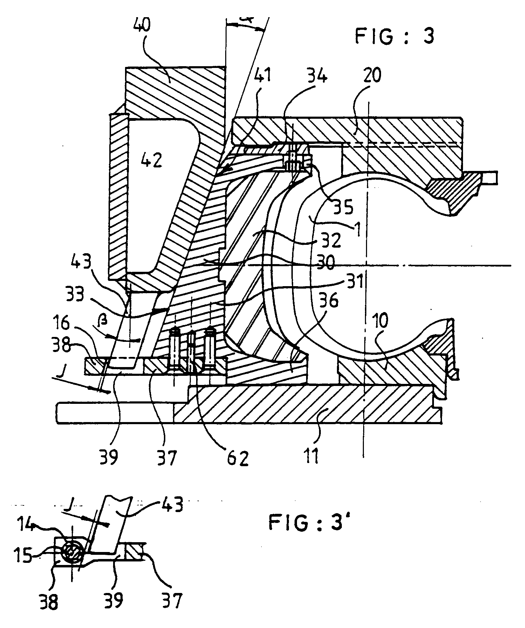

Les figures 3, 4 et 5 sont des coupes selon Y'Y' à la figure 7.

On aperçoit aux différentes figures la partie moulante inférieure 10 rendue solidaire du plateau inférieur 11, la partie moulante supérieure 20, un secteur 30 de la série de secteurs assurant le moulage de la bande de roulement. Ce secteur 30 est constitué d'une partie support 31, et d'une partie 32 assurant le moulage de la bande de roulement. Le secteur 30 présente une face 33 tronconique inclinée d'un angle α. Des plaquettes de glissement 34 sont vissées sur l'extrémité supérieure 35 de secteur 30, pour favoriser le glissement du secteur 30 le long de la partie moulante supérieure 20, et aussi pour limiter l'usure que pourrait provoquer le contact entre secteur 30 et partie moulante supérieure 20 survenant dans la cinématique de fermeture du moule.

La couronne périphérique 40 comporte une face 41 radialement intérieure tronconique, dont l'inclinaison est identique à l'inclinaison α de la face 33 des secteurs 30. La cavité intérieure 42 permet la circulation d'un fluide caloporteur pour effectuer la vulcanisation.

Les secteurs 30 sont sollicités en permanence par des ressorts 50, 51, en basculement et en recul radial. Chaque ressort 50 est disposé dans un évidement 12 prévu dans le plateau inférieur 11. Chaque ressort 50 tend à repousser vers le haut un poussoir 52 dont la course est limitée par une butée 53 fixée sur le plateau inférieur 11.

Le poussoir 52 agit sur la partie inférieure 36 du secteur 30, à l'extrémité radialement intérieure de celui-ci. Les ressorts 51 de traction tendent en permanence à reculer les secteurs 30 vers leur position d'ouverture, et ce recul radial est limité par la couronne 40, ainsi que par l'axe 6 solidaire de chaque secteur 30. La partie centrale 61 de l'axe 6 peut glisser dans une boutonnière 13 délimitant le débattement radial autorisé pour l'axe 6.

Chaque secteur 30 comporte deux plaques 37 rapportées par vissage en partie inférieure 36. Les pions de cisaillement 62 assurent la transmission des forces des plaques 37 aux secteurs 30. Chaque plaque 37 forme une protubérance 30 horizontale se développant radialement au-delà de la face 33 inclinée formant le dos de chaque secteur 30. Un logement 39 est percé au travers de chaque plaque 37, au niveau de ladite protubérance 38. Au droit de chaque logement, la couronne 40 comporte une tige 43 inclinée s'étendant axialement vers le bas par rapport à la couronne 40.

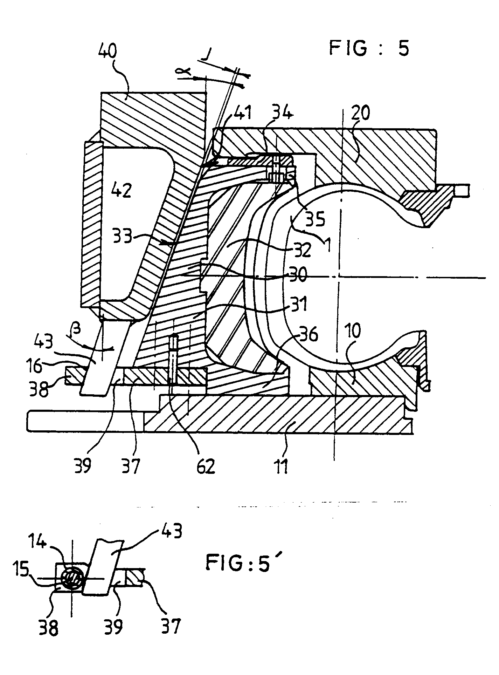

Le fonctionnement du moule est le suivant. Après avoir introduit le pneumatique l à vulcaniser, la partie moulante supérieure 20 et la couronne 40 sont abaissées selon la procédure habituelle pour ce type de moule. Les moyens spécifiques de la présente invention, à savoir les plaques 37 et les tiges 43, n'ont pas à intervenir pour assurer la fermeture dit moule. On aperçoit à la figure 3 que les tiges 43 peuvent librement pénétrer dans les logements 39 sans entrer en contact avec les plaques 37. La figure 4 montre le moule totalement fermé : il subsiste un jeu radial J entre le côté radialement extérieur de chaque tige, et le bord correspondant 16 du logement 39. Pour ouvrir le moule, il faut d'abord, tout en maintenant immobile le plateau supérieur (donc la partie moulante supérieure 20) relever la couronne 40. On aperçoit à la figure 5 que la couronne 40 libère les secteurs 30, les tiges 43 viennent en contact avec les bords 16 des logements 39, et le jeu J est reporté entre couronne 40 et secteurs 30. L'action des ressorts de tractions 51 est insuffisante pour décoller des secteurs 30 du pneumatique vulcanisé et ceux-ci restent donc à leur position de fermeture, le basculemnt sous l'action des ressorts 50 étant rendu impossible par la présence de la partie moulante supérieure 20 encore en contact avec les secteurs 30.

En continuant le mouvement d'élévation de la couronne 40, les tiges 43 provoquent une traction sur les secteurs 30 et forcent donc le mouvement de recul purement radial favorable au bon démoulage de la sculpture de la bande de roulement, sans provoquer de défauts sur celle-ci. De préférence, l'inclinaison β que font les tiges 43 est inférieure à l'inclinaison α des faces tronconiques 41 et 33, ce qui, ajouté au jeu J, empêche tout coincement à l'ouverture, et empêche toute collision entre pièces à la fermeture.

Les figures 3' 4', 5' et 7' représentent une variante d'exécution des plaques 37. On remplace le frotttement de glissement des tiges 43 sur le bord 16 par un frottement de roulement. A cette fin, on utilise un galet d'usure 14 monté mobile en rotation sur un axe 15 disposé à l'extrémité des plaques 37 et fermant le logement 39. Cette variante permet un ajustement du jeu J en jouant sur le diamètre du galet d'usure 14.

Dès que la sculpture est démoulée, il n'est plus nécessaire que le recul soit purement radial. On peut relever la partie moulante supérieure 20 et la suite du mouvement d'ouverture des secteurs est assurée, comme connu, par des ressorts 50 et 51.

Outre le fait qu'elle permet d'assurer un recul purement radial lors du démoulage, combiné avec un basculement ultérieur des secteurs 30, l'invention n'impose qu' un minimum de modifications aux moules connus et permet donc d'assurer un gain important en qualité des pneumatiques moulés avec un minimum d'investissement. En outre, la commande du recul radial ne requiert pas une grande précision d'usinage et/ou de montage, ce qui constitue encore un avantage de la présente invention.

## Revendications

1. Moule à secteurs (30) pour le moulage et la vulcanisation des pneumatiques, du type comportant une partie moulante inférieure (10) pour le moulage d'un flanc du pneumatique, une partie moulante supérieure (20) pour le moulage de l'autre flanc, et une série de secteurs (30) pour le moulage de la bande de roulement, ainsi qu'une couronne (40) de fermeture et de frettage de la série de secteurs (30), la couronne (40) comprenant une face inclinée (41), les mouvements d'ouverture, fermeture impliquant un recul radial des secteurs (30) et un basculement du haut des secteurs (30) vers l'extérieur, ainsi qu'une élévation de la partie supérieure (20), la face radialement extérieure (33) de chaque secteur (30) étant inclinée de façon à coopérer avec la face inclinée complémentaire (41) de ladite couronne (40), la couronne (40) pouvant être élevée et abaissée séparément de la partie moulante supérieure (20), chaque secteur (30) étant en permanence rappelé vers la position reculée et basculée par un ou des ressorts, **caractérisé** en ce que chaque secteur (30) est pourvu d'au moins une protubérance horizontale (38) se développant radialement au-delà de ladite face inclinée (33), chaque protubérance étant percée d'un logement (39), et en ce que la couronne (40) comporte, en correspondance avec chaque logement (39), une tige (43) inclinée disposée de façon à pouvoir pénétrer dans le logement (39) lors de la fermeture du moule, et destinée à coopérer avec ladite protubérance (38) pour provoquer le recul radial des secteurs (30) lors de l'ouverture du moule.

2. Moule selon la revendication 1, caractérisé en ce que, en position de fermeture, il subsiste un jeu radial (J) entre le côté radialement extérieur de chaque tige (43), et le bord (16) correspondant de son logement (39).

3. Moule selon la revendication 1 ou 2, caractérisé en ce que, ladite face radialement extérieure (33) de chaque secteur (30) étant inclinée d'un angle α par rapport à l'axe du moule, chaque tige (43) est inclinée d'un angle β légèrement plus petit que α.

4. Moule selon l'une des revendications 1 à 3, caractérisé en ce que les protubérances (38) sont constituées par au moins une plaque (37) rapportée en partie inférieure (36) de chaque secteur (30), ledit logement (39) étant percé au travers de chaque plaque (37).

5. Moule selon la revendication 4, caractérisé en ce que un galet (14) est monté mobile en rotation sur un axe (15) disposé à l'extrémité desdites plaques (37), et fermant ledit logement (39).

## Patentansprüche

1. Form mit Segmenten (30) zum Formen und Vulkanisieren von Reifen, vom Typ mit einem unteren formenden Bereich (10) zum Formen einer Flanke des Reifens, einem oberen formenden Bereich (20) zum Formen der anderen Flanke und einer Reihe von Segmenten (30) zum Formen der Lauffläche, sowie einem Kranz (40) zum Schließen und Festziehen der Reihe von Segmenten (30), welcher Kranz eine geneigte Fläche (41) umfaßt, wobei die Öffnungs- und Schließbewegungen eine radiale Rückzugsbewegung der Segmente (30) und eine Schwenkbewegung des Oberteils der Segmente (30) nach außen sowie eine Anhebung des oberen Bereichs (20) implizieren, wobei die radial äußere Fläche (33) eines jeden Segments (30) derart geneigt ist, daß sie mit der komplementären geneigten Fläche (41) des Kranzes (40) zusammenwirkt, wobei der Kranz (40) vom oberen formenden Bereich (20) getrennt angehoben und abgesenkt werden kann, wobei jedes Segment (30) andauernd durch eine oder mehrere Federn in die zurückgezogene und geschwenkte Position beaufschlagt wird,
**dadurch gekennzeichnet,**
daß jedes Segment (30) mit wenigstens einem horizontalen Vorsprung (38) versehen ist, der sich radial jenseits der geneigten Fläche (33) entwickelt, daß jeder Vorsprung von einer Aussparung (39) durchbrochen ist und daß der Kranz (40) entsprechend zu jeder Aussparung (39) eine geneigte Stange (43) aufweist, die derart angeordnet ist, daß sie beim Schließen der Form in die Aussparung (39) eindringen kann und bestimmt ist, um mit dem Vorsprung (38) zusammenzuwirken, um die radiale Rückzugsbewegung der Segmente (30) beim Öffnen der Form hervorzurufen.

2. Form nach Anspruch 1,
dadurch gekennzeichnet,
daß in geschlossener Position ein radiales Spiel (J) zwischen der radial äußeren Seite einer jeden Stange (43) und der entsprechenden Kante (16) ihrer Aussparung (39) besteht.

3. Form nach Anspruch 1 oder 2,
dadurch gekennzeichnet,
daß wenn die radial äußere Fläche (33) eines jeden Segments (30) unter einem Winkel α gegen die Achse der Form geneigt ist, jede Stange (43) unter einem Winkel β geneigt ist, der geringfügig kleiner als α ist.

4. Form nach einem der Ansprüche 1 bis 3,
dadurch gekennzeichnet,
daß die Vorsprünge (38) aus wenigstens einer am unteren Bereich (36) eines jeden Sektors (30) versetzt angebrachten Platte (37) bestehen, wobei die Aussparung (39) durch jede Platte (37) gebrochen ist.

5. Form nach Anspruch 4,
dadurch gekennzeichnet,
daß eine Walze (14) drehbeweglich an einer am Ende der Platten (37) angeordneten Achse (15) angeordnet ist und die Aussparung (39) verschließt.

## Claims

1. A sector mold (30) for the molding and vulcanizing of tires, of the type comprising a lower molding-part (10) for the molding of one sidewall of the tire, an upper molding part (20) for the molding of the other sidewall, and a series of sectors (30) for the molding of the tread, as well as a ring (40) for the closing and hooping of the series of sectors (30), the ring (40) comprising an inclined face (41), the opening and closing movements involving a radial recoil of the sectors (30) and a swinging upward of the sectors (30) towards the outside, as well as a lifting of the upper part (20), the radially outer face (33) of each sector (30) being inclined so as to cooperate with the complementary inclined face (41) of said ring (40), the ring (40) being adapted to be raised and lowered separately from the upper molding part (20), each sector (30) being continuously urged towards the recoiled and swung position by one or more springs, characterized by the fact that each sector (30) is provided with at least one horizontal protuberance (38) which extends radially beyond said inclined face (33), each protuberance being pierced by a recess (39), and by the fact that the ring (40) comprises, in correspondence with each recess (39), an inclined rod (43) which is arranged in such a manner as to be capable of penetrating into the recess (39) upon the closing of the mold and is intended to cooperate with the said protuberance (38) in order to cause the radial recoil of the sectors (30) upon the opening of the mold.

2. A mold according to Claim 1, characterized by the fact that, in closed position, there is radial clearance (J) between the radially outer side of each rod (43) and the corresponding edge (16) of its recess (39).

3. A mold according to Claim 1 or 2, characterized by the fact that, the said radially outer face (33) of each sector (30) being inclined by an angle α with respect to the axis of the mold, each rod (43) is inclined by an angle β which is slightly smaller than α.

4. A mold according to any of Claims 1 to 3, characterized by the fact that the protuberances (38) are formed by at least one plate (37) attached to the lower part (36) of each sector (30), said recess (39) being pierced through each plate (37).

5. A mold according to Claim 4, characterized by the fact that a roller (14) is mounted movably in rotation on a pin (15) which is arranged on the end of the said plates (37) and closing the said recess (39).
